# EUROPÄISCHE PATENTSCHRIFT

(11) **EP 0 788 588 B1**
(45) Veröffentlichungstag und Bekanntmachung des Hinweises auf die Patenterteilung: **17.10.2001**
(21) Anmeldenummer: 96907995.3
(22) Anmeldetag: 01.04.1996
(51) Int. Cl.: F16K 1/44, F16K 31/06

(54) **MAGNETVENTIL ZUR STEUERUNG VON HOCHDRUCKMEDIEN**
MAGNETIC VALVE FOR CONTROLLING HIGH PRESSURE MEDIA
ELECTROVANNE POUR COMMANDE DE FLUIDES SOUS HAUTES PRESSION

(30) Priorität: 26.08.1995 DE 19531394
(43) Veröffentlichungstag der Anmeldung: 13.08.1997
(73) Patentinhaber: ROBERT BOSCH GMBH, 70442 Stuttgart (DE)
(72) Erfinder: DRUMMER, Eugen, A-4400 Steyr (AT)
(86) Internationale Anmeldenummer: DE9600566
(87) Internationale Veröffentlichungsnummer: WO9708480

(56) Entgegenhaltungen:
- DE-A- 1 600 798
- DE-A- 2 236 137
- DE-A- 2 428 650

## Beschreibung

### Stand der Technik

Die Erfindung geht von einem Magnetventil gemäß der Gattung des Patentanspruchs 1 aus. Bei einem solchen durch die EP-A2-0 331 200 bekannten Magnetventil ist der Ventilsitz als Flachsitz ausgebildet, mit dem eine ebene, stirnseitige Dichtfläche des Ventilglieds zusammenwirkt. Dabei wird das Ventilglied durch eine Druckfeder in Schließrichtung beaufschlagt und von einem Magnetanker bei Erregung des Elektromagneten in Öffnungsrichtung betätigt. Diese Ausgestaltung hat den Nachteil, daß es problematisch ist, die Paarung Dichtfläche und Ventilsitz hochdruckdicht zu bekommen. Hierzu müssen die beteiligten Flächen hochgenau parallel liegen. Vor allem, wenn ventilgliedseitig in dem an diesen angrenzenden Raum Hochdruck herrscht und im Druckkanal Niederdruck herrscht, ist es wesentlich, daß sich Undichtheiten nicht noch zusätzlich in einer Kraftbeaufschlagung auf das Ventilglied in Öffnungsrichtung auswirken.

### Vorteile der Erfindung

Durch das erfindungsgemäße Magnetventil mit den Merkmalen des Patentanspruchs 1 wird eine Lösung erreicht, mit der eine hochgenaue Dichtpassung zwischen Ventilglied und seiner Sitzfläche am Rande des Austritts des Druckkanals an der Kugelkappe erzielt wird. Wegen der geringen Auflagefläche des Ventilglieds auf seinem Sitz treten hier hohe Flächenpressungen auf. Im Laufe des Betriebs des Magnetventils kann es sich aufgrund der hohen Flächenpressung am Sitz ergeben, daß sich der zunächst scharfkantige Sitz im Bereich des Austritts des Druckkanals zu einer ringförmigen Abplattung verformt. Diese wird aber immer hochgenau parallel zur Dichtfläche an der Stirnseite des Ventilglieds liegen, so daß eine dauernde Dichtheit gewährleistet ist. Dies stellt eine wesentliche Verbesserung gegenüber der Ausgestaltung gemäß dem Stand der Technik dar, wobei beim möglichen Einschlagen des Ventilsitzes in den ihn aufnehmenden Körper im Laufe des Betriebs des Magnetventil der Werkstoff nicht ohne weiteres gleichmäßig abfließen bzw. sich verformen kann. Hier besteht die Gefahr einer auftretenden Undichtheit des Ventils in Schließstellung. Gemäß Patentanspruch 2 wird das Ventilglied unter Einwirkung einer Schließfeder auf den Sitz bewegt, derart, daß das Ventilglied auch Verformungen des Ventilsitzes folgen kann.

Das erfindungsgemäße Magnetventil läßt sich vorteilhaft insbesondere zur Steuerung von hohen Drücken wie Kraftstoffeinspritzdrücken von über 1000 bar einsetzen.

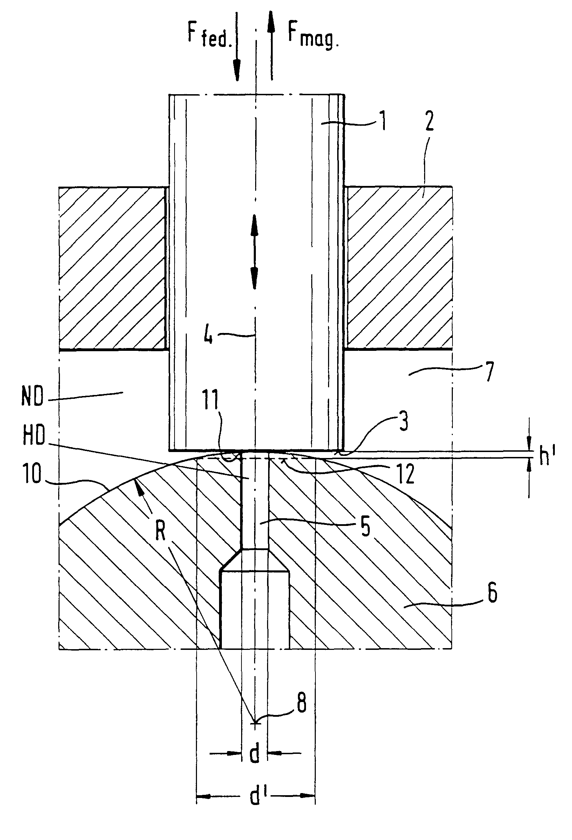

In der Zeichnung ist ein Ausführungsbeispiel der Erfindung dargestellt und wird in der nachfolgenden Beschreibung näher erläutert.

### Beschreibung des Ausführungsbeispiels

In der Figur ist von einem Magnetventil lediglich der erfindungswesentliche Teil gezeigt in Form des Ventilglieds 1, das durch den Magneten nach oben bewegt wird und durch eine Federkraft nach unten bewegt wird, entsprechend den in der Zeichnung eingezeichneten Pfeilen. Das Ventilglied ist in einem Gehäuse 2 geführt und weist eine senkrecht zur Achse des Ventilglieds stehende Stirnseite 3 auf. An dieser ist die Dichtfläche des Ventils verwirklicht. Koaxial zur Achse 4 tritt dem Ventilglied stirnseitig gegenüber ein Druckkanal 5 aus einem Sitzelement 6 in einen Raum 7 aus. Dieser Raum kann z. B. dem Niederdruck ausgesetzt sein und entsprechend mit einer Entlastungsleitung verbunden sein. Demgegenüber kann in dem Druckkanal 5 ein hoher Druck herrschen, der zu dem Raum 7 bei geöffnetem Ventil entlastet wird.

Das Sitzelement ist zum Raum 7 hin kugelkappenförmig ausgeführt und hat insbesondere im Bereich des Austritts des Druckkanals 5 die Form einer Kugelkappe, deren Kugelmittelpunkt 8 auf der dem Ventilglied 1 und dem Druckkanal 5 gemeinsamen Achse 4 liegt. Somit bildet sich am Austritt des Druckkanals an der kugeligen Oberfläche 10 eine scharfe Kante 11, auf der die Dichtfläche 3 des Ventilglieds in seiner Schließstellung dichtend zur Anlage kommt. Hier entstehen hohe Flächenpressungen, die eine hohe Dichtheit gewährleisten. Aufgrund der hohen Flächenpressung können sich die Materialteile an der scharfen Kante 11 im Laufe des Betriebs des Magnetventils etwas verformen. Die Verformung folgt dann exakt der Form der Dichtfläche. Etwas übertrieben dargestellt ist mit der gestrichelten Linie 12 ein gedachter Endzustand der Verformung am Sitzelement 6 erreicht. Dabei vergrößert sich die Dichtfläche, auf die durch den Durchmesser d' abzüglich der Fläche aus dem Durchmesser d sich ergebende Ringfläche. Diese Fläche liegt hochgenau parallel zur Dichtfläche, so daß bei weiterhin noch hohen Schließpressungen eine sehr gute Dichtheit des Ventils erreicht wird. Dabei bietet sich bei der Gestalt des Sitzelements der Vorteil, daß sich verformendes Material leicht zur Seite hin, von dem Druckkanal weg bewegen kann.

Die Dichtheit des Ventils ist auch dann gewährleistet, wenn der Durchmesser des Ventilglieds im Bereich seiner Dichtfläche 3 größer ist als die sich nach einigen Betriebsstunden ergebende Fläche des Ventilsitzes 12, da bereits in dem Raum 7 Niederdruck herrscht, der dem auf der anderen Seite des Ventilgliedes herrschenden Druck entspricht. Somit wirken über die Drücke im Raum 7 keine Kräfte in Öffnungsrichtung.

Mit der hier gegebenen Ausgestaltung des Magnetventils kann eine kleinstmögliche Dichtfläche erreicht werden bei hoher Genauigkeit der Flächenzuordnung von Ventilsitz 12 zur Dichtfläche 3. Da mit zunehmender Verformung ferner die Fläche des Ventilsitzes zunimmt, wird die durchschnittliche Kraftbeaufschlagung pro Flächeneinheit mit der Zeit so gering, daß ab einem bestimmten Zustand keine weiteren plastischen Verformungen durch Krafteinwirkung des über die Schließfeder nach unten bewegten Ventilglieds mehr auftreten. Mit der Verformung werden andererseits kleine Fertigungstoleranzabweichungen sehr schnell ausgeglichen, es ergibt sich eine hohe Hochdruckdichtheit des Ventils.

## Patentansprüche

1. Magnetventil zur Steuerung von Hochdruckmedien mit einem von einem Elektromagneten betätigten Ventilglied (1), das mit seiner ebenen Stirnseite (3) als Dichtfläche mit einem Ventilsitz (12) zusammenwirkt, an dem koaxial zur Achse (4) des Ventilglieds (1) ein Druckkanal (5) mündet und wobei der Ventilsitz (12) Teil eines Sitzelementes (6) ist, **dadurch gekennzeichnet, daß** der Druckkanal (5) am Sitzelement (6) austritt, dessen dem Ventilglied zugewandte Oberfläche (10) als Teil einer Kugelkappe geformt ist mit einem gedachten Kugelmittelpunkt (8), der auf der Achse des koaxial zur Achse (4) des Ventilglieds liegenden austretenden Druckkanals (5) liegt und daß am Austritt des Druckkanals (5) an der Oberfläche (10) der Ventilsitz (12) gebildet ist.

2. Magnetventil nach Anspruch 1, **dadurch gekennzeichnet, daß** das Ventilglied (1) unter Einwirkung einer Schließfeder auf den Ventilsitz (12) bewegt wird und unter Einwirkung der Magnetkraft des Elektromagneten vom Ventilsitz (12) abgehoben wird.

## Claims

1. Solenoid valve for controlling high-pressure media, having a valve member (1) which is actuated by an electromagnet and, with its flat end face (3), cooperates as sealing surface with a valve seat (12) at which a pressure channel (5) opens out coaxially with the axis (4) of the valve member (1), the valve seat (12) being part of a seating element (6), **characterized in that** the pressure channel (5) converges at the seating element (6), whose surface (10) facing the valve member is shaped as part of a spherical cap with an imaginary spherical centre (8) which lies on the axis of the emerging pressure channel (5), situated coaxially with the axis (4) of the valve member, and **in that** the valve seat (12) is formed at the outlet of the pressure channel (5) on the surface (10).

2. Solenoid valve according to Claim 1, **characterized in that** the valve member (1) is moved onto the valve seat (12) under the action of a closing spring, and is lifted from the valve seat (12) under the action of the magnetic force of the electromagnet.

## Revendications

1. Electrovanne de commande de fluides sous hautes pressions, comportant un organe de soupape (1) actionné par un électroaimant et qui, par sa face frontale plane (3) servant de portée d'étanchéité coopère avec un siège de soupape (12) dans lequel débouche un canal de pression (5), coaxial à l'axe (4) de l'organe de soupape (1), ce siège de soupape (12) étant une partie d'un élément de siège (6),
**caractérisée en ce que**
le canal de pression (5) débouche sur l'élément de siège (6) dont la surface (10) en regard de l'organe de soupape a la forme d'une partie de calotte sphérique dont le centre (8) est situé sur l'axe du canal de pression (5) coaxial à l'axe (4) de l'organe de soupape, le siège de soupape (12) étant formé sur la surface (10), à la sortie du canal de pression (5).

2. Electrovanne selon la revendication 1,
**caractérisée en ce que**
l'organe de soupape (1) est poussé sur le siège de soupape (12) par un ressort de fermeture et soulevé de ce siège (12) par l'action d'un électroaimant.
